# EUROPEAN PATENT APPLICATION

(11) **EP 3 540 265 A1**
(43) Date of publication of application: **18.09.2019**
(21) Application number: 17870498.7
(22) Date of filing: 10.11.2017
(51) Int. Cl.: F16H 37/06, B25J 17/00

(54) **MULTI-DIRECTIONAL DRIVE DEVICE, ROBOT JOINT MECHANISM, AND MULTI-DIRECTIONAL DRIVE METHOD**

(30) Priority: 14.11.2016 JP 2016221632
(71) Applicant: NEC Embedded Products, Ltd., Minato-ku, Tokyo 108-0073 (JP); National University Corporation Yamagata University, Yamagata 990-8560 (JP)
(72) Inventor: OKAZAKI, Yasunori, Tokyo 108-0073 (JP); MATSUDA, Tomomi, Tokyo 108-0073 (JP); TADAKUMA, Riichiro, Yonezawa-shi Yamagata 992-8510 (JP); SAITO, Hiroto, Yonezawa-shi Yamagata 992-8510 (JP); ABE, Kazuki, Yonezawa-shi Yamagata 992-8510 (JP); HAO, Shinnosuke, Yonezawa-shi Yamagata 992-8510 (JP); MOGI, Kazuki, Yonezawa-shi Yamagata 992-8510 (JP)
(74) Representative: Glawe, Delfs, Moll
(86) International application number: PCT/JP2017/040534
(87) International publication number: WO 2018/088508

(57) **Abstract**

A multi-directional drive device includes a first drive motor supported by a holding portion and having a first drive shaft, a rotary member integrally connected to the first drive shaft of the first drive motor and configured to rotate together with the first drive shaft, a spherical body supported on the rotary member to be relatively rotatable and configured to rotate about a second rotation center axis different from a first rotation center axis of the first drive shaft, a second drive motor mounted on the rotary member and having a second drive shaft independent of the first drive shaft, and a transmission mechanism provided between the second drive shaft of the second drive motor and the spherical body on the rotary member and configured to transmit power of the second drive shaft to the spherical body and cause the spherical body to slidably rotate about the second rotation center axis with respect to the rotary member,
wherein a body to be operated is supported by the spherical body.

## Description

### TECHNICAL FIELD

The present invention relates to a multi-directional drive device, a robot joint mechanism, and a multi-directional drive method capable of adjusting a position and/or orientation of a body to be operated such as a camera, a robot arm, or the like with a plurality of degrees of freedom.

### BACKGROUND ART

A technique in which a body to be operated such as a camera and a robot arm are controlled such that they are rotated by an XY stage which is a driven body is known.

For example, a multi-directional drive device described in Patent Document 1 includes a driven body having an XY stage, a first driving force transmission unit which is in contact with a surface of the driven body and drives the driven body in a first direction, and a second driving force transmission unit which is in contact with the other portion of the driven body and drives the driven body in a second direction different from the first direction.

Further, in the above-described multi-directional drive device, the driven body and the first driving force transmission unit are mutually displaced in a tooth trace direction of a gear, the driven body and the second driving force transmission unit are mutually displaceable in a tooth trace direction of a gear, and thus it is possible to freely adjust an angle of a body to be operated which is mounted on the driven body.

However, in the multi-directional drive device disclosed in Patent Document 1, although the driven body and the first and second driving force transmission units are mutually displaced in the tooth trace direction of the gear, the driven body can move generally in the first direction or the second direction on the XY stage.

Therefore, in the multi-directional drive device disclosed in Patent Document 1, for example, it is impossible to rotate or move in a third direction (a z axis direction) orthogonal to the first direction or the second direction, and it is necessary to add a new mechanism for displacement in the third direction, resulting in a problem that a constitution thereof becomes complicated.

Additionally, a multi-directional drive device using a spherical body has been proposed to solve the above problem.

In this multi-directional drive device, protrusions serving as gears are disposed in the form of a matrix on an entire surface of the spherical body on which the body to be operated is supported, a concave gear groove which meshes with a gear on the spherical body is provided on the side of a holding portion which supports the spherical body, and a drive gear which changes a direction of the body to be operated is provided inside the spherical body and the holding portion.

Additionally, in this multi-directional drive device, the body to be operated which is supported by the spherical body is rotated in a plurality of directions by selectively driving the drive gear inside the spherical body and the holding portion.

### CITATION LIST

### Patent Literature

[Patent Document 1]
Japanese Unexamined Patent Application, First Publication No. 2011-196487

### SUMMARY OF INVENTION

### Problem to be solved by the Invention

However, in this multi-directional drive mechanism, the protrusions serving as gears have to be disposed precisely in the form of a matrix on the entire surface of the spherical body, and thus there is a problem of high production costs.

In addition, it is necessary to mount the drive gear and also a motor for driving the drive gear on the side of the spherical body, and due to such a constitution, there is a problem that the number of parts increases and it is difficult to reduce a size and weight.

Further, in the above-described multi-directional drive mechanism, it is necessary to provide a concave gear groove, which meshes with a gear on the spherical body, on the side of the holding part which supports the spherical body, and thus there is a problem that the driving force cannot be transmitted at a portion in which there is no gear groove.

That is, in the above-described multi-directional drive mechanism, in accordance with a mounting state of the concave gear groove located on the side of the holding portion, the spherical body may not turn in a rolling direction, a movable range may be restricted, and even in a pitching direction, there is a limitation in the movable range due to an influence of wiring to a motor, and there is a problem that it is not possible to rotate the spherical body.

In addition, although multi-directional drive devices such as a gimbal structure, an ultrasonic motor type, and a magnetic force type have also been proposed, problems such as complexity of the structure, little power, occurrence of a magnetic influence, and the like occur separately.

The present invention has been made in view of the above circumstances and provides a multi-directional drive device, a robot joint mechanism, and a multi-directional drive method capable of freely rotating a spherical body, on which a body to be operated is supported, in a plurality of directions with a simple constitution.

### Means for Solving the Problem

In order to solve the above-described problems, the present invention proposes the following means.

One embodiment of the present invention provides a multi-directional drive device including a first drive motor supported by a holding portion and having a first drive shaft, a rotary member integrally connected to the first drive shaft of the first drive motor and configured to rotate together with the first drive shaft, a spherical body supported on the rotary member to be relatively rotatable and configured to rotate about a second rotation center axis different from a first rotation center axis of the first drive shaft, a second drive motor mounted on the rotary member and having a second drive shaft independent of the first drive shaft, and a transmission mechanism provided between the second drive shaft of the second drive motor and the spherical body on the rotary member and configured to transmit a motive force of the second drive shaft to the spherical body and cause the spherical body to slidably rotate about the second rotation center axis with respect to the rotary member, wherein a body to be operated is supported by the spherical body.

### Advantageous Effects of Invention

According to the present invention, with a simple constitution, it is possible to rotate a spherical body supporting an operated object in a plurality of directions without interference between operations using a first drive motor and a second drive motor.

### BRIEF DESCRIPTION OF DRAWINGS

FIG. 1 is a schematic constitution diagram of a multi-directional drive device according to one embodiment.
FIG. 2 is a plan view of a multi-directional drive device according to a first embodiment.
FIG. 3 is a front view of the multi-directional drive device according to the first embodiment.
FIG. 4 is a cross-sectional view taken along line IV-IV shown in FIG. 2 of the multi-directional drive device according to the first embodiment.
FIG. 5 is a cross-sectional view taken along line V-V shown in FIG. 2 of the multi-directional drive device according to the first embodiment.
FIG. 6 is a cross-sectional view taken along line VI-VI shown in FIG. 2 of the multi-directional drive device according to the first embodiment.
FIG. 7 is a perspective view showing an application example of the multi-directional drive device of the first embodiment.
FIG. 8 is a plan view of a multi-directional drive device according to a second embodiment.
FIG. 9A is a side view of the multi-directional drive device shown in FIG. 8 as seen from a side.
FIG. 9B is a front view of the multi-directional drive device according to the second embodiment.
FIG. 10 is a cross-sectional view taken along line X-X shown in FIG. 8 of the multi-directional drive device according to the second embodiment.
FIG. 11 is a cross-sectional view taken along line XI-XI shown in FIG. 8 of the multi-directional drive device according to the second embodiment.
FIG. 12 is a cross-sectional view taken along line XII-XII shown in FIG. 9B of the multi-directional drive device according to the second embodiment.

### DESCRIPTION OF EMBODIMENTS

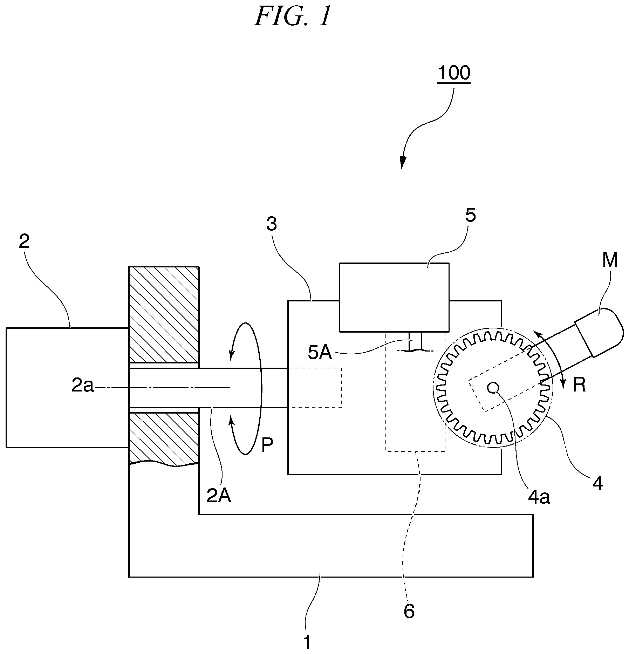

A multi-directional drive device 100 according to one embodiment will be described with reference to FIG. 1. FIG. 1 is a schematic constitution diagram of a multi-directional drive device according to one embodiment.

In FIG. 1, the reference numeral 1 indicates a holding portion serving as a base. A first drive motor 2 having a first drive shaft 2A is mounted on the holding portion 1.

A rotary member 3 which is integrally connected to the first drive shaft 2A and rotates together with the first drive shaft 2A (a rotation center axis is designated by a reference numeral 2a) is fixed to the first drive shaft 2A of the first drive motor 2.

A spherical body 4 which is slidably rotatable about a rotation center axis (indicated by a reference numeral 4a) not coinciding with the first drive shaft 2A is installed inside this rotary member 3. That is, the spherical body 4 which is freely rotatable around the rotation center axis 4a having different axis from the rotation center axis 2a is installed inside the rotary member 3 which is rotatable about the rotation center axis 2a of the first drive shaft 2A.

This spherical body 4 is adapted to be rotatable, for example, by a spherical surface thereof being gripped from the outside with a spherical body holding member integrated with the rotary member 3, and a work device M which is a body to be operated is supported on a part of the spherical body 4. That is, the spherical body 4 is rotatable about the rotation center axis 4a while rotating about the rotation center axis 2a together with the rotary member 3. The rotation of the spherical body 4 around the rotation center axis 4a with respect to the rotary member 3 while rotating together with the rotary member 3 is referred to as sliding rotation.

Regarding the work device M, for example, this is also applicable to a tactile force presentation device for guiding a person, an omnidirectional drive wheel, and so on, in addition to a joint mechanism of a robot or a swinging portion of a surveillance camera.

A second drive motor 5 independent of the first drive motor 2 is mounted on the rotary member 3.

The second drive motor 5 has a second drive shaft 5A, and a transmission mechanism 6, which transmits power of the second drive shaft 5A to the spherical body 4 and causes the spherical body 4 to perform sliding rotation around the rotation center axis 4a relative to the rotary member 3, is installed between the second drive shaft 5A and the spherical body 4 on the rotary member 3.

Additionally, in the multi-directional drive device 100 constituted as described above, when the first drive shaft 2A is driven around the rotation center axis 2a by the first drive motor 2 on the holding portion 1 as the base, the spherical body 4 on which the body to be operated is supported is rotationally driven in a pitching direction P via the rotary member 3.

Further, when the second drive shaft 5A is driven by the second drive motor 5, via the transmission mechanism 6, the spherical body 4 on which the work device M is supported is rotationally driven in the rolling direction R around the rotation center axis 4a while sliding with respect to the rotary member 3.

At this time, the first drive motor 2 and the first drive shaft 2A driven by the first drive motor 2 are mounted on the holding portion 1, and the second drive motor 5 and the second drive shaft 5A driven by the second drive motor 5 are mounted on the rotary member 3. Therefore, the spherical body 4 on which the body to be operated is supported is rotationally driven separately in the pitching direction P and/or the rolling direction R by the first drive motor 2 and the second drive motor 5.

Here, the spherical body 4 is supported to be rotatable about the rotation center axis 4a, which does not coincide with the rotation center axis 2a of the first drive shaft 2A, relative to the rotary member 3. Therefore, the spherical body 4 on which the work device M is supported can be freely rotated in a plurality of directions by driving the first drive motor 2 and the second drive motor 5 respectively.

That is, the multi-directional drive device 100 of FIG. 1 has a simple constitution including the rotary member 3 which is rotationally driven by the first drive motor 2 on the holding portion 1 serving as a base, the spherical body 4 which rotates on the rotary member 3 around the rotation center axis 4a not coinciding with the first drive shaft 2A, and the transmission mechanism 6 which rotationally drives the spherical body 4 using the second drive motor 5 mounted on the rotary member 3. Thus, it is possible to rotate the spherical body 4 supporting the work device M in a plurality of directions without interference between the operations due to the first drive motor 2 and the second drive motor 5.

Also, the spherical body 4 shown in FIG. 1 is not limited to a true sphere, and an overall cylindrical shape with the rotation center axis 4a as an axis center thereof, a spherical shape obtained by combining a plurality of cylindrical bodies having different diameters, or the like are also included.

### (First embodiment)

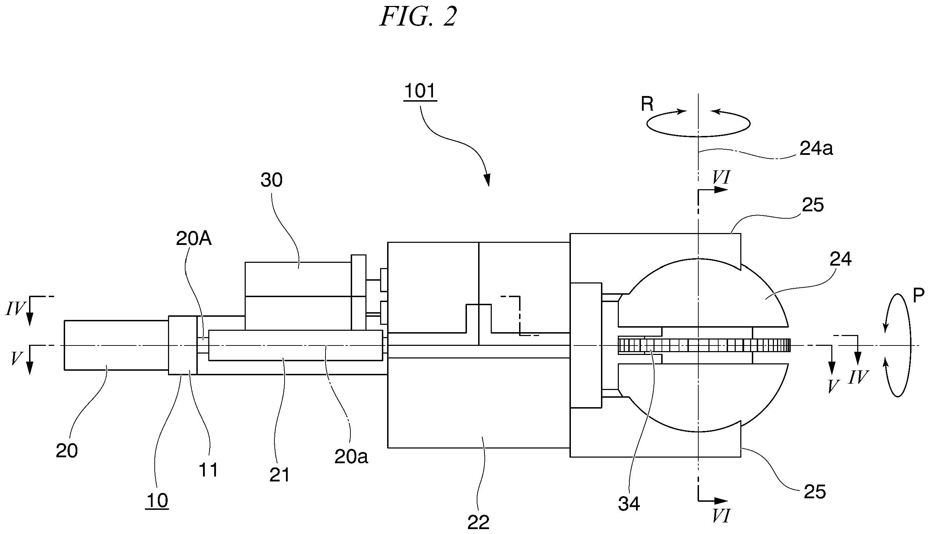

A multi-directional drive device 101 and a multi-directional drive method shown in a first embodiment will be described with reference to FIGS. 2 to 7.

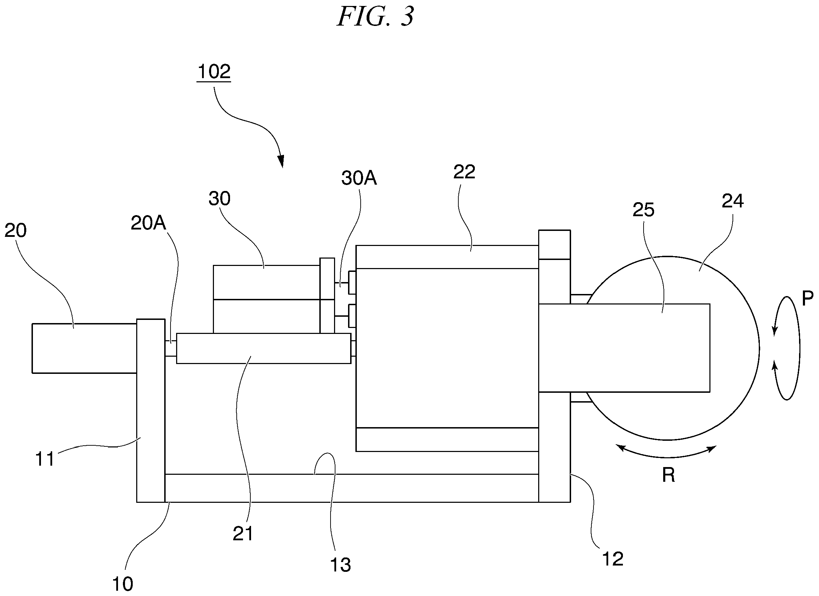

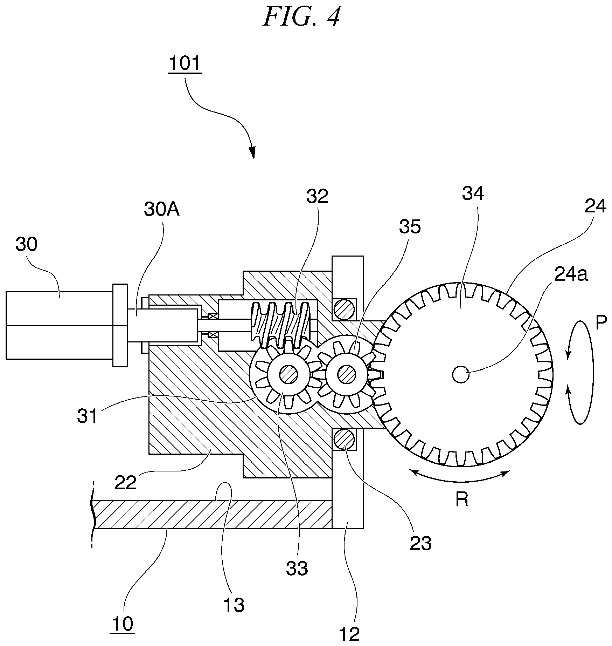

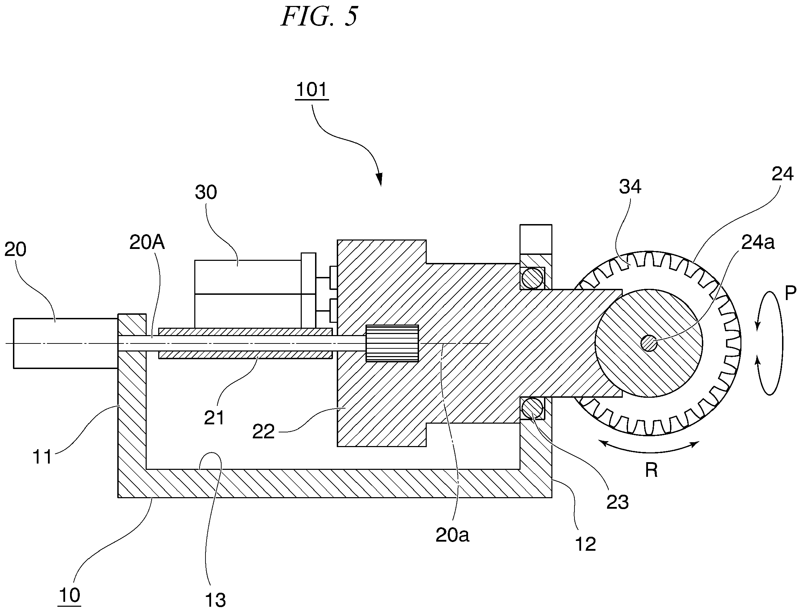

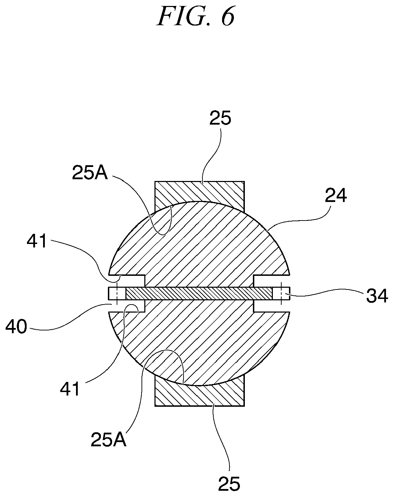

FIG. 2 is a plan view of the multi-directional drive device 101 according to the first embodiment. FIG. 3 is a front view of the multi-directional drive device 101 according to the first embodiment. FIG. 4 is a cross-sectional view taken along line IV-IV shown in FIG. 2 of the multi-directional drive device 101. FIG. 5 is a cross-sectional view taken along line V-V shown in FIG. 2 of the multi-directional drive device 101. FIG. 6 is a cross-sectional view taken along line VI-VI shown in FIG. 2 of the multi-directional drive device 101.

First of all, a reference numeral 10 in FIGS. 2 to 6 is a holding portion serving as a base.

As can be seen particularly with reference to FIGS. 3 and 5, the holding portion 10 is formed in a concave shape when seen from the front, a motor holding portion 11 for supporting a first drive motor 20 (which will be described later) is provided on the left side of the drawing, and a rotary member holding portion 12 for supporting a rotary member 22 (which will be described later) is provided on the right side of the drawing.

Further, a second drive motor 30 which rotationally drives the rotary member 22 and an accommodation space 13 in which a transmission mechanism 31 (which will be described later) is accommodated are formed between the motor holding portion 11 and the rotary member holding portion 12.

The first drive motor 20 having a first drive shaft 20A is installed in the motor holding portion 11 of the holding portion 10.

The rotary member 22 to which a rotational force of the first drive shaft 20A (a rotation center axis is designated by 20a) is transmitted via a connection shaft 21 is fixed to the first drive shaft 20A of the first drive motor 20.

The rotary member 22 is formed in a cylindrical shape as a whole with the rotation center axis 20a as an axis center thereof and is rotatably supported on the rotary member holding portion 12 of the holding portion 10 via bearings 23 installed around the rotary member 22, as shown in FIGS. 4 and 5.

A spherical body 24 which is relatively slidably rotatable about a rotation center axis (indicated by a reference numeral 24a) which does not coincide with the first drive shaft 20A is installed inside the rotary member 22. That is, the spherical body 24 which is rotatable about the rotation center axis 24a different from the rotation center axis 20a is installed inside the rotary member 22 which is rotatable about the rotation center axis 20a of the first drive shaft 20A.

The spherical body 24 is slidably rotatable by a spherical surface thereof being gripped from the outside by a spherical body holding member 25 integrated with the rotary member 22, and a work device M which is a body to be operated is supported on an outer circumferential surface of the spherical body 24. That is, the spherical body 24 is rotatable about the rotation center axis 24a while being rotatable about the rotation center axis 20a together with the rotary member 22. The spherical body 24 rotating together with the rotary member 22 and rotating about the rotation center axis 24a with respect to the rotary member 22 is referred to as sliding rotation. The rotation of the spherical body 24 around the rotation center axis 24a with respect to the rotary member 22 while rotating together with the rotary member 22 is referred to as sliding rotation.

The spherical body holding member 25 is a pair of concavo-convex members provided around the spherical body 24 and slidably and rotatably holds the spherical body 24 by pressing and gripping the spherical body 24 from the outside in a radial direction via a concave spherical surface 25A formed on the inside thereof, as shown in FIG. 6.

Further, the second drive motor 30 independent of the first drive motor 20 is mounted on the rotary member 22.

The second drive motor 30 has a second drive axis 30A. A transmission mechanism 31, which transmits power of the second drive shaft 30A to the spherical body 24 and causes the spherical body 24 to perform sliding rotation around the rotation center axis 24a relative to the rotary member 22, is installed between the second drive shaft 30A and the spherical body 24 on the rotary member 22.

As shown in detail in FIG. 4, the transmission mechanism 31 includes a worm gear 32 which is coaxially connected to the second drive shaft 30A of the second drive motor 30, a spur gear 33 which is meshed with the worm gear 32, a spur gear 34 which interlocks with the spur gear 33, and a spur gear 35 which is an intermediate gear interposed between the spur gears 33 and 34.

Among them, the worm gear 32 and the spur gear 33 meshed with the worm gear 32 have a function of changing a power transmission direction from the second drive shaft 30A of the second drive motor 30.

Also, the spur gear 33 is a driving side gear which is driven by the worm gear 32, the spur gear 34 is a driven gear which interlocks with the spur gear 33 via the intermediate gear 35, and a rotation center axis of the spur gear 34 coincides with the rotation center axis 24a of the spherical body 24. In addition, the spur gears 33 to 35 are disposed in the same plane overall.

Further, the spur gear 34 on the driven side is accommodated in a groove portion 40 of the spherical body 24 with the same center as that of the spherical body 24.

As shown in detail in FIG. 6, the groove portion 40 is provided to turn around a circumferential surface of the spherical body 24 and has a groove wall surface 41 on both sides thereof along the radial direction of the spherical body 24.

The spur gear 34 in the groove portion 40 is disposed at the center between the groove wall surfaces 41 and also in the radial direction of the spherical body 24, and a tooth tip of the spur gear 34 is disposed at an inside position at the same height as that of the spherical surface of the spherical body 24 or lower than the spherical surface of the spherical body 24.

Additionally, as described above, due to the constitution in which the tooth tip of the spur gear 34 is disposed at the inside position at the same height as that of the spherical surface of the spherical body 24 or lower than the spherical surface of the spherical body 24, the spur gear 34 in the spherical body 24 does not interfere with other members, and the spherical body 24 can be rotated smoothly at the time of sliding rotation of the spherical body 24 with respect to the rotary member 22.

According to the multi-directional drive device 101 of the first embodiment constituted as described above, when the first drive shaft 20A is driven abount the rotation center axis 20a by the first drive motor 20 on the holding portion 10 serving as the base, the spherical body 24 on which the body to be operated is supported is rotationally driven in the pitching direction P via the rotary member 22.

Also, when the second drive shaft 30A is driven by the second drive motor 30, the spherical body 24 on which the body to be operated is supported is rotationally driven in the rolling direction R about the rotation center axis 24a while sliding with respect to the spherical body holding member 25 of the rotary member 22 via the gears 32 to 35 of the transmission mechanism 31.

At this time, the first drive motor 20 and the first drive shaft 20A driven by the first drive motor 20 are mounted on the holding portion 10, and also, the second drive motor 30 and the second drive shaft 30A driven by the second drive motor 30 are mounted on the rotary member 22. Therefore, the spherical body 24 on which the body to be operated is supported is separately rotationally driven in the pitching direction P and/or the rolling direction R by the first drive motor 20 and the second drive motor 30.

Here, the spherical body 24 is supported by the rotating member 22 to be rotatable about the rotation center axis 24a which does not coincide with the first drive shaft 20A. Therefore, the spherical body 24 on which the work device M is supported can be freely rotated in a plurality of directions by respectively driving the first drive motor 20 and the second drive motor 30.

That is, the multi-directional drive device 101 according to the first embodiment has a simple constitution including the rotary member 22 which is rotationally driven by the first drive motor 20 on the holding portion 10 serving as the base, the spherical body 24 which rotates on the rotary member 22 about the rotation center axis 24a not coinciding with the first drive shaft 20A, and the transmission mechanism 31 which rotationally drives the spherical body 24 by the second drive motor 30 mounted on the rotary member 22. Thus, it is possible to rotate the spherical body 24 supporting the work device M in the plurality of directions without interference between the operations due to the first drive motor 20 and the second drive motor 30.

Also, in the multi-directional drive device 101 according to the first embodiment, since the spherical surface of the spherical body 24 is gripped and rotatable by the spherical body holding member 25 integral with the rotary member 22 from the outside, it is possible to smoothly rotate the spherical body 24 in the pitching direction P.

Further, in the multi-directional drive device 101 according to the first embodiment, the tooth tip of the spur gear 34 accommodated in the groove portion 40 of the spherical body 24 is disposed at the inside position at the same height as that of the spherical surface of the spherical body 24 or lower than the spherical surface of the spherical body 24. Accordingly, in the embodiment, the spur gear 34 in the spherical body 24 does not interfere with other members and the spherical body 24 can smoothly rotate at the time of the sliding rotation of the spherical body 24 with respect to the rotary member 22.

In summary of the above-described points, in the multi-directional drive device 101 of the first embodiment, the second drive motor 30 and the transmission mechanism 31 which drive the spherical body 24 in the rolling direction R are mounted on the rotary member 22. Therefore, it is possible to rotate the rotary member 22 in the rolling direction R while rotating it in the pitching direction P.

Also, the multi-directional drive device 101 of the first embodiment has the constitution in which the spherical surface of the spherical body 24 is gripped with rotatably by the spherical body holding member 25 mounted on the rotary member 22 from the outside. Accordingly, the spherical body holding member 25 can be slid smoothly with respect to the surface of the spherical body 24, and a rotational motion of the spherical body 24 is not disturbed.

Additionally, due to a structure as described above, it is not necessary to dispose a complicated gear structure over the entire surface of the spherical body, as in the related art, and the motor and the gear are disposed outside the spherical body rather than being built in the spherical body. Therefore, it is possible to reduce a size and a weight, to reduce the number of parts and to reduce manufacturing cost, and to expand a movable range of the spherical body.

Further, in the multi-directional drive device 101 of the first embodiment, since a structure excellent in symmetry such as the spherical body 24 is adopted as the member for supporting the work device M, it is also possible to support a load on the entire spherical body. That is, it is superior to a differential gear in terms of load resistance and rigidity.

Also, unlike a gimbal structure having a two-layer structure, since it has a one-layer structure including only the spherical body and the support frame thereof, it is possible to reduce the number of parts, thereby making it possible to reduce a size, a weight, and cost.

Also, unlike the gimbal structure so far, since it is possible to reduce a possibility of mechanical interference between components, it is possible to increase the movable range around two rotation axes.

Further, in the multi-directional drive device 101 of the first embodiment, in contrast to an ultrasonic motor system which transmits the rotational force with high frequency vibration, it is possible to reduce the size to the same degree while reliably transmitting a higher output. Also, in contrast to a magnetic force system which is driven by a combination of a plurality of permanent magnets disposed in an inner spherical body and a plurality of electromagnets disposed in an outer spherical shell, since it is not necessary to support the whole structure with a two-layer gimbal structure, the number of parts can be reduced. That is, since it is possible to reduce the size, the weight, and the cost, and also, the magnetic force is not used, an effect that an influence on peripheral electronic devices can be reduced can be obtained.

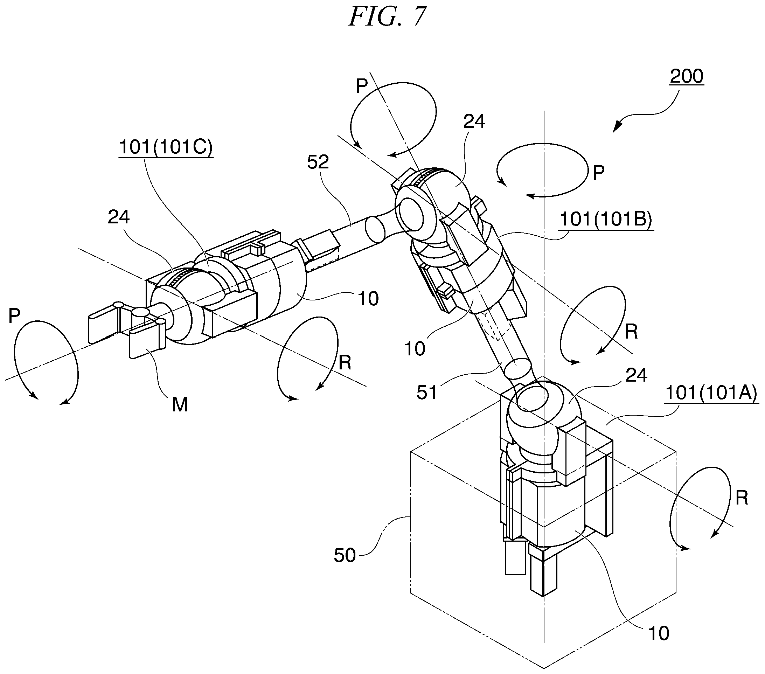

Next, a robot joint mechanism 200 to which the multi-directional drive device 101 of the first embodiment is applied will be described with reference to FIG. 7. FIG. 7 is a perspective view showing an application example of the multi-directional drive device of the first embodiment.

This robot joint mechanism 200 has a plurality of (at least two) multi-directional drive devices 101. In this example, three multi-directional drive devices 101 (designated by reference numerals 101A to 101C) are disposed in series.

Specifically, in the multi-directional drive device 101A located at a base end, the holding portion 10 is installed on a base member 50 serving as a base, and also, the spherical body 24 located at a tip is connected to the multi-directional drive device 101B located at an intermediate portion via an arm member 51.

Also, in the multi-directional drive device 101B located at the intermediate portion, the holding portion 10 is installed on the arm member 51, and the spherical body 24 at the tip is connected to the multi-directional drive device 101C located at a tip portion via an arm member 52.

Also, in the multi-directional drive device 101C located at the tip portion, the holding portion 10 is installed on the arm member 52, and the work device M is installed on the spherical body 24 located at the tip.

Additionally, according to the robot joint mechanism 200 constituted as described above, each of the spherical bodies 24 is rotationally driven in the respective pitching directions P around the rotation center axis 20a via the rotary member 22 by each of the first drive motors 20 of the multi-directional drive devices 101A to 101C.

Also, each of the spherical bodies 24 is rotationally driven in the respective rolling directions R around the rotation center axis 24a by each of the second drive motors 30 of the multi-direction drive devices 101A to 101C.

That is, according to the robot joint mechanism 200, the first drive motor 20 and the second drive motor 30 of each of the multi-direction drive devices 101A to 101C are driven respectively. Accordingly, each of the spherical bodies 24 can be rotationally driven in the respective pitching direction P and/or rolling direction R, and the work device M located at the most tip portion can be rotated and moved in a plurality of directions.

### (Second embodiment)

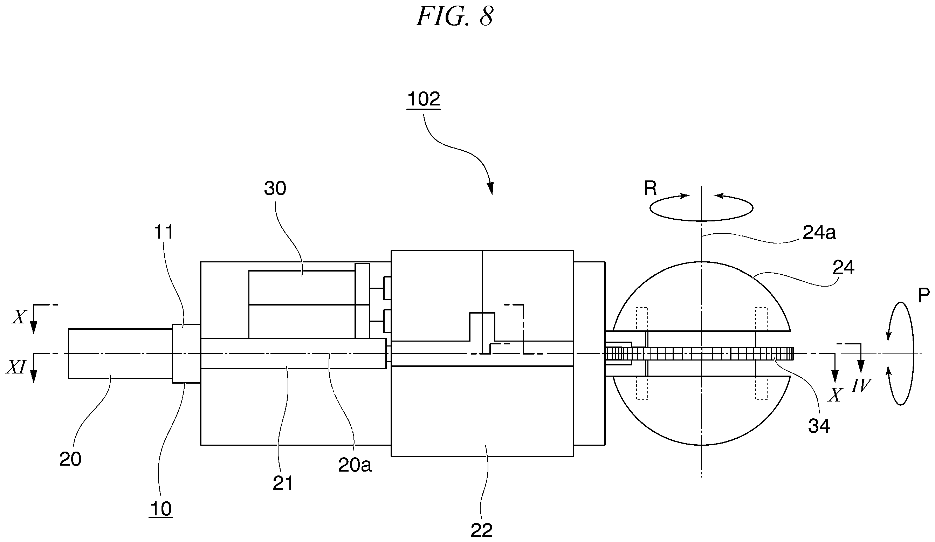

A multi-directional drive device 102 shown in a second embodiment will be described with reference to FIGS. 8 to 12. In the description of the second embodiment, the same reference numerals are given to portions having the same constitutions as those in the above-described first embodiment, and redundant explanation will be appropriately omitted.

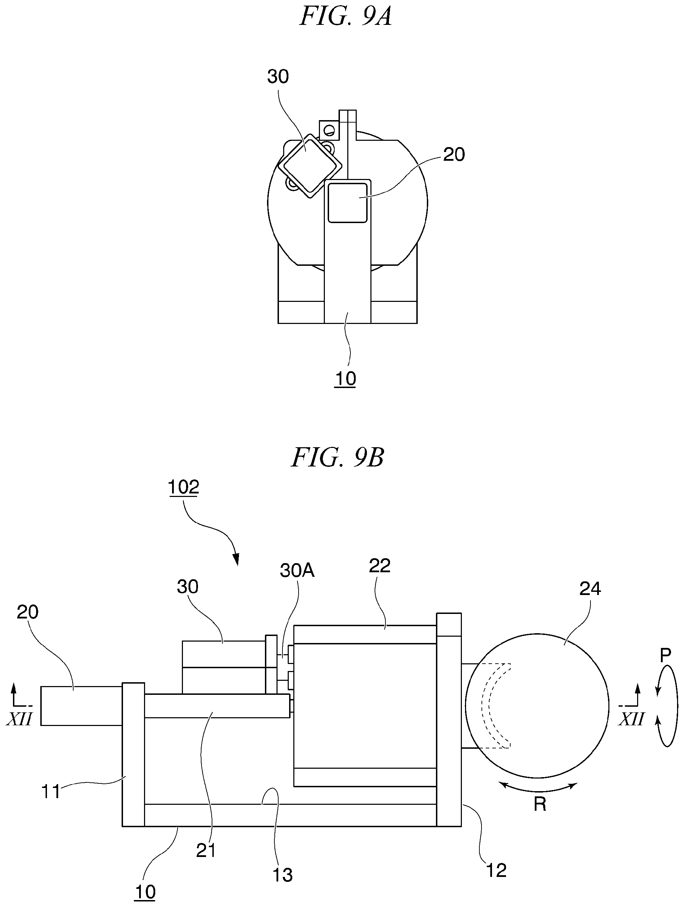

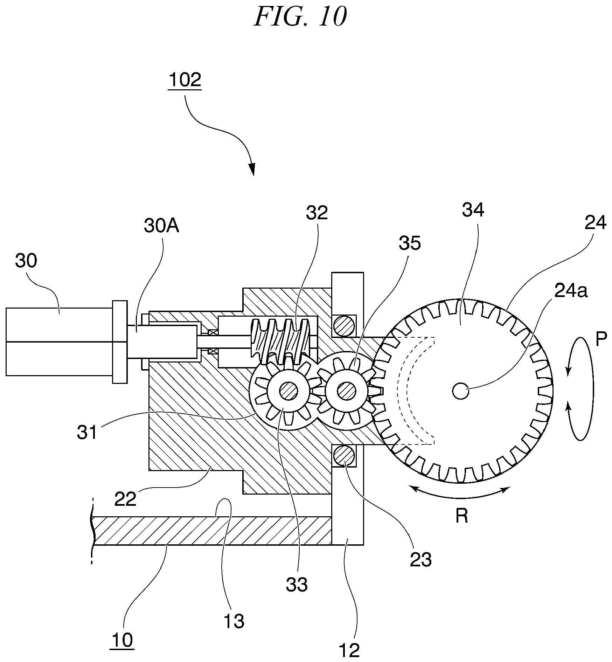

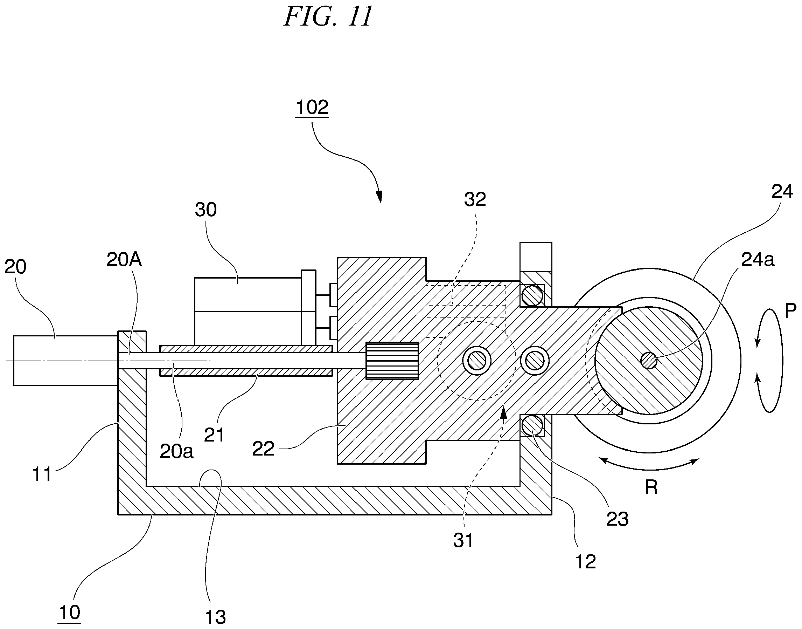

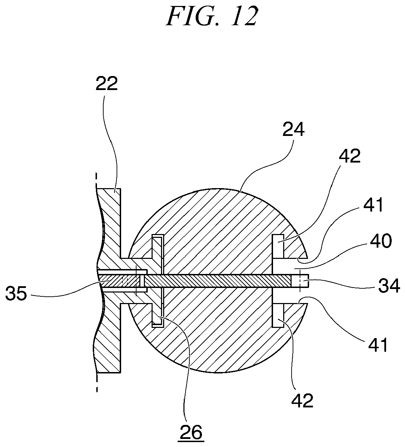

FIG. 8 is a plan view of the multi-directional drive device 102 according to a second embodiment. FIG. 9A is a side view of the multi-directional drive device 102 shown in FIG. 8 when seen from a side. FIG. 9B is a front view of the multi-directional drive device 102. FIG. 10 is a cross-sectional view taken along line X-X shown in FIG. 8 of the multi-directional drive device 102. FIG. 11 is a cross-sectional view taken along line XI-XI shown in FIG. 8 of the multi-directional drive device 102. FIG. 12 is a cross-sectional view taken along line XII-XII shown in FIG. 9B of the multi-directional drive device 102.

The multi-directional drive device 102 shown in the second embodiment is different from the multi-directional drive device 101 shown in the first embodiment in a constitution in which the multi-directional drive device 102 is provided integrally with the rotary member 22 and a constitution of the spherical body holding member as the concavo-convex member which holds the spherical body 24 to be slidably rotatable.

That is, as shown in detail in FIG. 12 in particular, the spherical body holding member 26 according to this embodiment is a protruding body accommodated in the annular groove portion 40 together with the spur gear 34, and a tip portion thereof is bent and the bent portion is engaged in an engagement concave portion 42 formed in a wall surface 41 in the groove portion 40.

Also, the spherical body holding member 26 is constituted by two members, and the bent portion of each of the members is accommodated and engaged in the engagement concave portion 42 formed in two wall surfaces 41 of the groove portion 40.

Additionally, in the spherical body holding member 26, since the spherical body 24 is gripped to be slidably rotatable from the inside with respect to the rotary member 22 via the groove portion 40 formed in the spherical body 24, it is possible to smoothly rotate the spherical body 24 in the pitching direction P.

Also, in the multi-directional drive device 102 of the second embodiment, the tooth tip of the spur gear 34 accommodated in the groove portion 40 of the spherical body 24 is disposed at an inside position at the same height as that of the spherical surface of the spherical body 24 or lower than the spherical surface of the spherical body 24, like the first embodiment. Therefore, in the embodiment, the spur gear 34 in the spherical body 24 can smoothly rotate the spherical body 24 without obstructing movement of other members at the time of the sliding rotation of the spherical body 24 with respect to the rotary member 22.

Further, in the second embodiment, as the bent portion formed at the tip portion of the spherical body holding member 26 is engaged with the engagement concave portion 42 formed in the wall surface 41 in the ring-shaped groove portion 40 from the inside, the spherical body 24 is supported on the rotary member 22 to be slidably and rotatable.

However, the present invention is not limited thereto, and the spherical body 24 may be supported to be slidably rotatable while being engaged by sandwiching engaging the bent portion formed at the tip portion of the spherical body holding member 26 with the ring-shaped concave portion formed in the outer spherical surface of the spherical body 24, and a support form thereof is not limited.

Although a plurality of embodiments have been described in detail with reference to the drawings, specific constitutions are not limited to this embodiment, and design changes and so on within the scope not departing from the gist of the embodiment are included.

Some or all of the above embodiments may also be described as follows, but are not limited to the following supplementary notes:

### (Supplementary Note 1)

A multi-directional drive device includes:
a first drive motor supported by a holding portion and having a first drive shaft,
a rotary member integrally connected to the first drive shaft of the first drive motor and configured to rotate together with the first drive shaft,
a spherical body supported on the rotary member to be relatively rotatable and configured to rotate about a second rotation center axis different from a first rotation center axis of the first drive shaft,
a second drive motor mounted on the rotary member and having a second drive shaft independent of the first drive shaft, and
a transmission mechanism provided between the second drive shaft of the second drive motor and the spherical body on the rotary member and configured to transmit power of the second drive shaft to the spherical body and cause the spherical body to slidably rotate about the second rotation center axis with respect to the rotary member,
wherein a body to be operated is supported by the spherical body.

### (Supplementary Note 2)

The multi-directional drive device described in Supplementary Note 1, wherein a concavo-convex member which holds the spherical body to be slidably rotatable is provided on the rotary member.

### (Supplementary Note 3)

The multi-directional drive device described in Supplementary Note 2, wherein, as the concavo-convex member, spherical concave surface which holds the spherical body to be slidably rotatable by sandwiching a spherical surface of the spherical body from the outside is provided in the rotary member.

### (Supplementary Note 4)

The multi-directional drive device described in Supplementary Note 2, wherein, as the concavo-convex member, a protruding portion which holds the spherical body to be slidably rotatable by being engaged with an annular groove portion of the spherical body is provided on the rotary member.

### (Supplementary Note 5)

The multi-directional drive device described in any one of Supplementary Notes 1 to 4, wherein the transmission mechanism includes a driving side gear installed on the rotary member and driven by the second drive shaft of the second drive motor, and a driven gear installed inside the spherical body and configured to rotate in conjunction with the driving side gear, and
the driven gear is accommodated in a groove portion of the spherical body.

### (Supplementary Note 6)

The multi-directional drive device described in Supplementary Note 5, wherein the driven gear rotates together with the spherical body around the second rotation center axis passing through a center of the spherical body.

### (Supplementary Note 7)

The multi-directional drive device described in Supplementary Note 5 or 6, wherein a tooth tip of the driven gear is disposed at an inside position at the same height as that of the spherical surface of the spherical body or lower than the spherical surface of the spherical body.

### (Supplementary Note 8)

The multi-directional drive device described in any one of Supplementary Notes 5 to 7, wherein a power conversion gear which changes a direction of the power of the second drive motor and transmits the power to the driving side gear is provided in the second drive shaft.

### (Supplementary Note 9)

The multi-directional drive device described in any one of Supplementary Notes 1 to 8, wherein a bearing which rotatably supports the rotary member with respect to the holding portion is installed between the holding portion and the rotary member.

### (Supplementary Note 10)

A robot joint mechanism including at least two multi-directional drive devices described in any one of Supplementary Notes 1 to 9,
wherein the holding portion of a second multi-directional drive device is installed on the spherical body of a first multi-directional drive device via an arm member.

### (Supplementary Note 11)

The robot joint mechanism described in Supplementary Note 10, wherein the first multi-directional drive device is located on a base side, and the second multi-directional drive device is located on a tip side, and
the holding portion of the first multi-directional driving device is installed on a base member serving as a base, and a work device which is a body to be operated is installed on the spherical body of the second multi-directional drive device.

### (Supplementary Note 12)

A multi-directional drive method includes:
rotationally driving a rotary member integrally connected to a first drive shaft of a first drive motor on a holding portion, and
rotationally driving, with a second drive shaft of a second drive motor mounted on the rotary member being independent of the first drive shaft, a spherical body supported on the rotary member to be slidably rotatable and configured to rotate about a second rotation center axis different from a first rotation center axis of the first drive shaft and have a body to be operated on an outer surface thereof.

This application claims the priority based on Japanese Patent Application No. 2016-221632 filed on November 14, 2016 in Japan and incorporates all the disclosures therein.

### INDUSTRIAL APPLICABILITY

The present invention relates to a multi-directional drive device, a robot joint mechanism, and a multi-directional drive method capable of adjusting a position and/or orientation of a body to be operated such as a camera, a robot arm, or the like with a plurality of degrees of freedom.

### [Reference Signs List]

- 1: Holding portion
- 2: First drive motor
- 2A: First drive shaft
- 2a: Rotation center axis
- 3: Rotary member
- 4: Spherical body
- 4a: Rotation center axis
- 5: Second drive motor
- 5A: Second drive shaft
- 6: Transmission mechanism
- 10: Holding portion
- 20: First drive motor
- 20A: First drive shaft
- 20a: Rotation center axis
- 22: Rotary member
- 24: Spherical body
- 24a: Rotation center axis
- 25: Spherical body holding member
- 26: Spherical body holding member
- 30: Second drive motor
- 30A: Second drive shaft
- 31: Transmission mechanism
- 32: Worm gear
- 40: Groove portion
- 100: Multi-directional drive device
- 101: Multi-directional drive device
- 102: Multi-directional drive device
- 200: Robot joint mechanism
- M: Work device

## Claims

1. A multi-directional drive device comprising:
a first drive motor supported by a holding portion and having a first drive shaft;
a rotary member integrally connected to the first drive shaft of the first drive motor and configured to rotate together with the first drive shaft;
a spherical body supported on the rotary member to be relatively rotatable and configured to rotate about a second rotation center axis different from a first rotation center axis of the first drive shaft;
a second drive motor mounted on the rotary member and having a second drive shaft independent of the first drive shaft; and
a transmission mechanism provided between the second drive shaft of the second drive motor and the spherical body on the rotary member and configured to transmit power of the second drive shaft to the spherical body and cause the spherical body to slidably rotate about the second rotation center axis with respect to the rotary member,
wherein a body to be operated is supported by the spherical body.

2. The multi-directional drive device according to claim 1, wherein a concavo-convex member which holds the spherical body to be slidably rotatable is provided on the rotary member.

3. The multi-directional drive device according to claim 2, wherein, as the concavo-convex member, spherical concave surface which holds the spherical body to be slidably rotatable by sandwiching a spherical surface of the spherical body from the outside is provided in the rotary member.

4. The multi-directional drive device according to claim 2, wherein, as the concavo-convex member, a protruding portion which holds the spherical body to be slidably rotatable by being engaged with an annular groove portion of the spherical body is provided on the rotary member.

5. The multi-directional drive device according to any one of claims 1 to 4, wherein the transmission mechanism includes a driving side gear installed on the rotary member and driven by the second drive shaft of the second drive motor, and a driven gear installed inside the spherical body and configured to rotate in conjunction with the driving side gear, and
the driven gear is accommodated in a groove portion of the spherical body.

6. The multi-directional drive device according to claim 5, wherein the driven gear rotates together with the spherical body around the second rotation center axis passing through a center of the spherical body.

7. The multi-directional drive device according to claim 5 or 6, wherein a tooth tip of the driven gear is disposed at an inside position at the same height as that of the spherical surface of the spherical body or lower than the spherical surface of the spherical body.

8. The multi-directional drive device according to any one of claims 5 to 7, wherein a power conversion gear which changes a direction of the power of the second drive motor and transmits the power to the driving side gear is provided in the second drive shaft.

9. The multi-directional drive device according to any one of claims 1 to 8, wherein a bearing which rotatably supports the rotary member with respect to the holding portion is installed between the holding portion and the rotary member.

10. A robot joint mechanism comprising:
at least two multi-directional drive devices according to any one of claims 1 to 9,
wherein the holding portion of a second multi-directional drive device is installed on the spherical body of a first multi-directional drive device via an arm member.

11. The robot joint mechanism according to claim 10, wherein the first multi-directional drive device is located on a base side, and the second multi-directional drive device is located on a tip side, and
the holding portion of the first multi-directional driving device is installed on a base member serving as a base, and a work device which is a body to be operated is installed on the spherical body of the second multi-directional drive device.

12. A multi-directional drive method comprising:
rotationally driving a rotary member integrally connected to a first drive shaft of a first drive motor on a holding portion, and
rotationally driving, with a second drive shaft of a second drive motor mounted on the rotary member being independent of the first drive shaft, a spherical body supported on the rotary member to be slidably rotatable and configured to rotate about a second rotation center axis different from a first rotation center axis of the first drive shaft and have a body to be operated on an outer surface thereof.
